# FASCICULE DE BREVET EUROPEEN

(11) **EP 4 144 647 B1**
(45) Date de publication et mention de la délivrance du brevet: **22.05.2024**
(21) Numéro de dépôt: 22193703.0
(22) Date de dépôt: 02.09.2022
(51) Int. Cl.: B64D 27/26

(54) **SYSTÈME D'ATTACHE MOTEUR AVANT POUR UN MOTEUR D'AÉRONEF QUI COMPORTE UNE STRUCTURE COMPACTE**
VORDERES TRIEBWERKBEFESTIGUNGSSYSTEM FÜR EIN FLUGZEUGTRIEBWERK, DAS EINE KOMPAKTE STRUKTUR AUFWEIST
SYSTEM FOR FRONT ENGINE MOUNT FOR AN AIRCRAFT ENGINE COMPRISING A COMPACT STRUCTURE

(30) Priorité: 03.09.2021 FR 2109209
(43) Date de publication de la demande: 08.03.2023
(73) Titulaire: Airbus Operations (S.A.S.), 31060 Toulouse Cedex 9 (FR)
(72) Inventeur: BERJOT, Michael, 31060 TOULOUSE (FR); ROBIGLIO, Thomas, 31060 TOULOUSE (FR)
(74) Mandataire: Cabinet Le Guen Maillet

(56) Documents cités:
- EP-A1- 3 750 811
- WO-A1-2021/104913
- FR-A1- 3 096 353

## Description

### DOMAINE TECHNIQUE

La présente invention concerne un système d'attache moteur avant pour un moteur d'aéronef, ainsi qu'un aéronef comportant au moins une telle attache moteur avant.

### ÉTAT DE LA TECHNIQUE ANTÉRIEURE

Un aéronef comporte classiquement au moins un moteur, en particulier un turboréacteur. Sous chaque aile et pour chaque moteur, l'aéronef comporte un mât réacteur qui est fixé à la structure de l'aile et qui s'étend en-dessous de l'aile et le moteur est suspendu sous le mât réacteur.

Le moteur est fixé au mât réacteur par l'intermédiaire d'un système d'attache moteur comprenant une attache moteur avant et une attache moteur arrière.

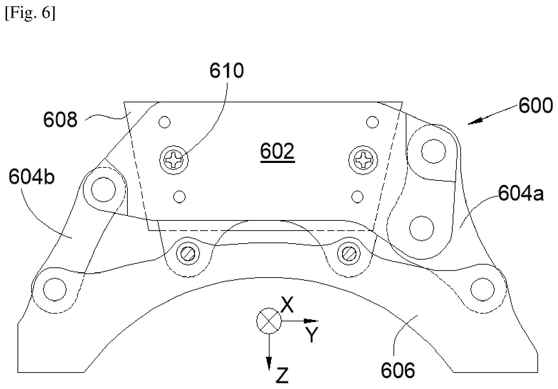

La Fig. 6 montre une attache moteur avant 600 de l'état de la technique qui comporte une poutre 602 fixée à une face avant du mât réacteur et deux bielles 604a-b fixées entre une chape de la poutre 602 et une chape d'un carter avant 606 du moteur par l'intermédiaire de liaisons rotules.

Le mât réacteur prend la forme d'un caisson présentant une nervure frontale 608 à laquelle la poutre 602 est fixée par des boulons de fixation 610 qui enserrent la nervure frontale 608 et la poutre 602.

Avec cet arrangement, les points de liaison des bielles 604a-b à la poutre 602 sont disposés sur les côtés du mât réacteur et de la nervure frontale 608 ce qui génère un volume d'occupation relativement important. Du fait de ce volume important, le capot qui entoure l'attache moteur avant 600 présente également des dimensions importantes générant une traînée importante.

Si une telle attache moteur avant est satisfaisante du point de vue de son utilisation, il est nécessaire de trouver une architecture différente qui permet d'obtenir une attache moteur avant qui soit moins encombrante permettant une optimisation de la surface aérodynamique.

Le document FR-A-3 096 353 et WO-A-2021/104913 divulguent des systèmes de l'état de la technique.

### EXPOSE DE L'INVENTION

Un objet de la présente invention est de proposer un système d'attache moteur avant dont les points de liaison des bielles se situent dans un espace retreint délimité par la projection de la face frontale du mât réacteur.

À cet effet, est proposé un système d'attache moteur avant pour un moteur d'un aéronef, ledit moteur présentant une direction longitudinale, le système d'attache moteur avant comportant :
- un mât réacteur comportant une paroi supérieure, une paroi inférieure, deux parois latérales et une face avant correspondant aux extrémités avant des parois supérieure, inférieure et latérales et une nervure frontale fixée contre la face avant,
- une attache moteur avant comportant une poutre fixée à l'avant de la nervure frontale, une première bielle fixée de manière articulée à la poutre par deux points de liaison et une deuxième bielle fixée de manière articulée à la poutre par un point de liaison, et
- un carter avant du moteur, où la première bielle est fixée de manière articulée au carter avant par un point de liaison et où la deuxième bielle est fixée de manière articulée au carter avant par un point de liaison,
caractérisé en ce que chaque point de liaison d'une bielle à la poutre est positionné à l'intérieur d'un volume qui prolonge vers l'avant la face avant du mât réacteur le long de la direction longitudinale.

Un tel système d'attache moteur avant présente un encombrement réduit et donc une traînée moindre.

Avantageusement, pour chaque point de liaison d'une bielle à la poutre, cette dernière présente une chape femelle dans laquelle se positionne la bielle.

Avantageusement, la poutre est constituée d'une plaque principale, d'une plaque secondaire parallèle à la plaque principale et d'un bloc formant une entretoise entre la plaque principale et la plaque secondaire, la plaque principale est plaquée contre la nervure frontale, et pour chaque chape femelle de la poutre, l'une des parois de ladite chape femelle est réalisée par la plaque principale et l'autre paroi de la ladite chape femelle est réalisée par la plaque secondaire.

L'invention propose également un aéronef comportant une structure, un moteur et un système d'attache moteur avant selon l'une des variantes précédentes, où le mât réacteur est fixé à la structure, et où le carter avant est solidaire du moteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue de face d'un système d'attache moteur avant selon l'invention,
Fig. 3 est une vue en perspective de derrière du système d'attache moteur de la Fig. 2,
Fig. 4 est une vue en coupe du système d'attache moteur avant de la Fig. 2 selon la ligne IV-IV,
Fig. 5 est une vue en perspective éclatée du système d'attache moteur avant de la Fig. 2, et
Fig. 6 est une vue de face d'un système d'attache moteur avant de l'état de la technique.

### EXPOSÉ DÉTAILLÉ DE MODES DE RÉALISATION

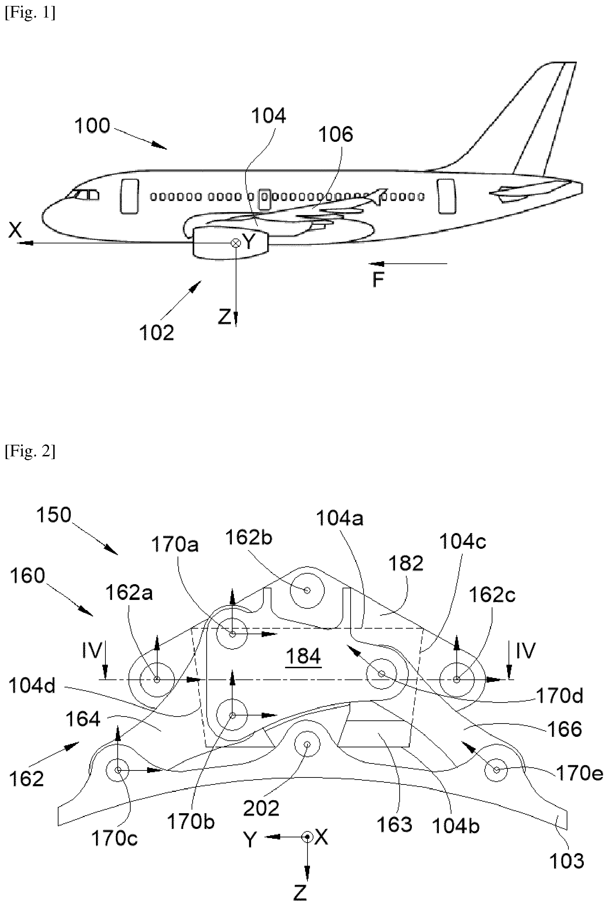

Dans la description qui suit, les termes relatifs à une position sont pris en référence à un aéronef en position d'avancement, c'est-à-dire comme il est représenté sur la Fig. 1, où la flèche F représente la direction d'avancement.

La Fig. 1 montre un aéronef 100 qui présente un moteur 102, en particulier un turboréacteur qui est fixé sous un mât réacteur 1104 lui-même fixé sous une aile 106.

Dans la description qui suit, et par convention, on appelle X la direction longitudinale du moteur 102 orientée positivement dans le sens d'avancement de l'aéronef 100, on appelle Y la direction transversale du moteur 102 qui est horizontale lorsque l'aéronef 100 est au sol, et Z la direction verticale ou hauteur verticale lorsque l'aéronef 100 est au sol, ces trois directions X, Y et Z étant orthogonales entre elles.

Le moteur 102 présente globalement une forme de révolution autour de l'axe longitudinal X.

Dans le mode de réalisation de l'invention présenté sur la Fig. 1, l'aéronef 100 comporte un moteur 102 sous chaque aile 106 de l'aéronef 100, mais il est possible de prévoir plusieurs moteurs sous chaque aile 106.

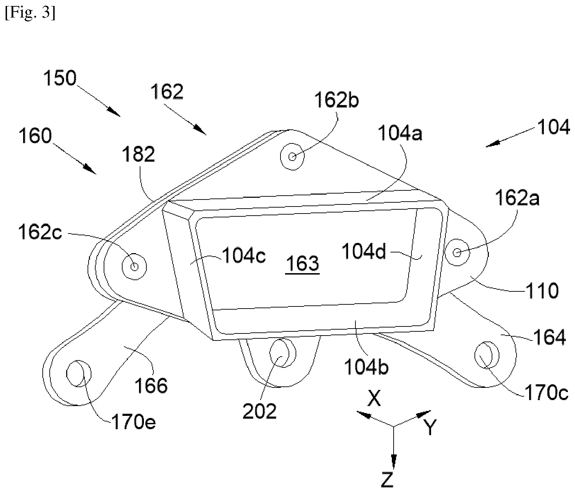

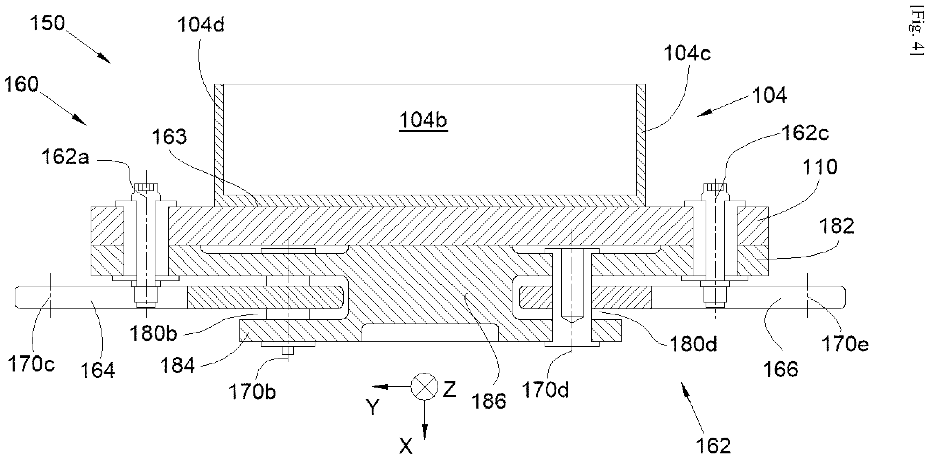

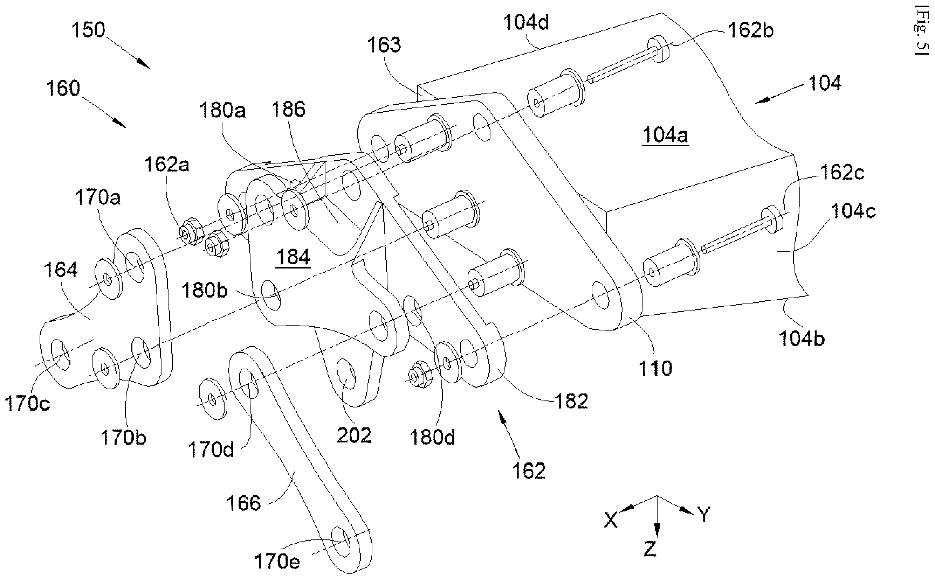

La Fig. 2 montre un système d'attache moteur avant 150 qui est fixé à la structure de l'aéronef 100, ici de l'aile 106, et s'étend sous l'aile 106 et supporte le moteur 102 et en particulier la partie avant du moteur 102. Les Figs. 3 à 5 montrent différentes vues du système d'attache moteur avant 150.

Le système d'attache moteur avant 150 comprend le mât réacteur 104 fixé à la structure de l'aile 106 et une attache moteur avant 160 fixée entre le mât réacteur 104 et un carter avant 103 solidaire du moteur 102.

Classiquement, une attache moteur arrière est fixée entre le mât réacteur 104 et une partie arrière du moteur 102 et elle peut prendre toute forme connue de l'homme du métier.

De manière connue, le mât réacteur 104 prend la forme d'un caisson qui comporte entre autres au niveau de sa partie avant, une nervure frontale 110 qui s'étend dans un plan sensiblement vertical perpendiculaire à la direction longitudinale X.

Le mât réacteur 104 comporte une paroi supérieure 104a, une paroi inférieure 104b et deux parois latérales 104c-d. Les différentes parois 104a-d sont solidaires les unes aux autres de manière à former un caisson dont la section verticale est globalement trapézoïdale. La nervure frontale 110 se fixe contre une face avant 163 par tous moyens connus comme par exemple par soudure. La face avant 163 correspond aux extrémités avant des parois 104a-d et prend globalement la forme d'un trapèze délimité par les parois104a-d.

L'attache moteur avant 160 comporte une poutre 162 fixée à l'avant de la nervure frontale 110 par trois points de fixation 162a-c. Chaque point de fixation 162a-c est réalisé ici par un boulon de serrage qui enserre la nervure frontale 110 et la poutre 162 et qui traverse un palier traversant des alésages prévus à cet effet dans la nervure frontale 110 et la poutre 162.

L'attache moteur avant 160 comporte également une première bielle 164. La première bielle 164 est fixée de manière articulée à la poutre 162 par deux points de liaison 170a-b et de manière articulée au carter avant 103 par un troisième point de liaison 170c.

L'attache moteur avant 160 comporte également une deuxième bielle 166 dont une première extrémité est fixée de manière articulée à la poutre 162 par un point de liaison 170d et dont une deuxième extrémité est fixée de manière articulée au carter avant 103 par un point de liaison 170e.

Au niveau de chaque point de liaison 170a-e, la fixation est assurée par des éléments de fixation connus de l'homme du métier et qui s'insèrent ici dans des alésages de la poutre 162 ou du carter avant 103 et l'alésage de ladite bielle 164, 166.

En particulier, chaque point de liaison 170a-e prend la forme d'une liaison pivot autour d'un axe de pivot globalement parallèle à la direction longitudinale X.

Dans le mode de réalisation de l'invention présenté ici, pour chaque point de liaison 170c, 170e d'une bielle 164, 166 au carter avant 103, ce dernier présente une chape femelle dans laquelle se positionne la bielle 164, 166.

Dans le mode de réalisation de l'invention présenté ici, pour chaque point de liaison 170a-b, 170d d'une bielle 164, 166 à la poutre 162, cette dernière présente une chape femelle 180a-b, 180d dans laquelle se positionne la bielle 164, 166.

Chaque point de liaison 170a-b, 170d d'une bielle 164, 166 à la poutre 162, c'est-à-dire ici l'axe de chaque chape femelle 180a-b, 180d de la poutre 162, est positionné à l'intérieur d'un volume qui prolonge vers l'avant la face avant 163 du mât réacteur 104 globalement le long de la direction longitudinale X. Comme cela est montré sur la Fig. 2 où les bords de la face avant 163 sont matérialisés en partie par des traits continus et en partie par des traits pointillés, les chapes femelles 180a-b, 180d sont toutes à l'intérieur du volume qui est délimité par lesdits bords et qui se situe en avant de la nervure frontale 110.

Du fait de cet arrangement, l'attache moteur avant 160 est plus compacte et son encombrement est donc réduit, ce qui permet de mettre en place des capots qui entourent l'attache moteur avant 160 aux dimensions réduites par rapport à l'état de la technique et présentant donc également une traînée réduite.

Dans le mode de réalisation de l'invention présenté ici, pour chaque point de liaison 170a-b, 170d associé à la poutre 162, les éléments de fixation comportent entre autres un palier qui loge dans un alésage de la bielle 164, 166 et dans deux alésages de la chape femelle 180a-b, 180d associée.

La Fig. 2 montre la répartition des efforts en fonctionnement normal de l'attache moteur avant 160.

Pour des raisons de sécurité, le système d'attache moteur avant 150 comporte également un point de liaison supplémentaire 202 entre la poutre 162 et le carter avant 103 et qui constitue un point de liaison de sécurité en attente (dit « waiting fail-safe » en langue anglo-saxonne) qui compensera une défaillance du chemin primaire d'efforts, c'est-à-dire d'au moins une des bielles 164, 166. Le point de liaison supplémentaire 202 est disposé entre les points de liaison 170c et 170e des bielles 164et 166 avec le carter avant 103.

De la même manière, l'un des points de fixation 162b entre la poutre 162 et la nervure frontale 110 constitue un point de fixation de sécurité en attente (dit « waiting fail-safe » en langue anglo-saxonne) qui compensera une défaillance du chemin primaire d'efforts, c'est-à-dire d'au moins un des deux autres points de fixation 162a, 162c.

La poutre 162 est constituée d'une plaque principale 182, d'une plaque secondaire 184 parallèle à la plaque principale 182 et d'un bloc 186 formant une entretoise entre la plaque principale 182 et la plaque secondaire 184.

La plaque principale 182 est plaquée contre la nervure frontale 110, à l'avant de cette dernière et la plaque secondaire 184 est en avant par rapport à la plaque principale 182.

La plaque principale 182 est percée des alésages permettant la réalisation des points de fixation 162a-c ainsi que l'alésage permettant la réalisation du point de liaison supplémentaire 202.

Pour chaque chape femelle 180a-b, 180d de la poutre 162 pour la mise en place d'une bielle 164, 166, l'une des parois de ladite chape femelle 180a-b, 180d est réalisée par la plaque principale 182 et l'autre paroi de la ladite chape femelle 180a-b, 180d est réalisée par la plaque secondaire 184, et chaque plaque 182, 184 est percée de l'alésage correspondant.

## Revendications

1. Système d'attache moteur avant (150) pour un moteur (102) d'un aéronef (100), ledit moteur (102) présentant une direction longitudinale (X), le système d'attache moteur avant (150) comportant :
- un mât réacteur (104) comportant une paroi supérieure (104a), une paroi inférieure (104b), deux parois latérales (104c-d) et une face avant (163) correspondant aux extrémités avant des parois supérieure, inférieure et latérales (104a-d) et une nervure frontale (110) fixée contre la face avant (163),
- une attache moteur avant (160) comportant une poutre (162) fixée à l'avant de la nervure frontale (110), une première bielle (164) fixée de manière articulée à la poutre (162) par deux points de liaison (170a-b) et une deuxième bielle (166) fixée de manière articulée à la poutre (162) par un point de liaison (170d), et
- un carter avant (103) du moteur (102), où la première bielle (164) est fixée de manière articulée au carter avant (103) par un point de liaison (170c) et où la deuxième bielle (166) est fixée de manière articulée au carter avant (103) par un point de liaison (170e),
**caractérisé en ce que** chaque point de liaison (170a-b, 170d) d'une bielle (164, 166) à la poutre (162) est positionné à l'intérieur d'un volume qui prolonge vers l'avant la face avant (163) du mât réacteur (104) le long de la direction longitudinale (X).

2. Système d'attache moteur avant (150) selon la revendication 1, **caractérisé en ce que** pour chaque point de liaison (170a-b, 170d) d'une bielle (164, 166) à la poutre (162), cette dernière présente une chape femelle (180a-b, 180d) dans laquelle se positionne la bielle (164, 166).

3. Système d'attache moteur avant (150) selon la revendication 2, **caractérisé en ce que** la poutre (162) est constituée d'une plaque principale (182), d'une plaque secondaire (184) parallèle à la plaque principale (182) et d'un bloc (186) formant une entretoise entre la plaque principale (182) et la plaque secondaire (184), **en ce que** la plaque principale (182) est plaquée contre la nervure frontale (110), et **en ce que** pour chaque chape femelle (180a-b, 180d) de la poutre (162), l'une des parois de ladite chape femelle (180a-b, 180d) est réalisée par la plaque principale (182) et l'autre paroi de la ladite chape femelle (180a-b, 180d) est réalisée par la plaque secondaire (184).

4. Aéronef (100) comportant une structure, un moteur (102) et un système d'attache moteur avant (150) selon l'une des revendications précédentes, où le mât réacteur (104) est fixé à la structure, et où le carter avant (103) est solidaire du moteur (102).

## Patentansprüche

1. Vorderes Triebwerksbefestigungssystem (150) für ein Triebwerk (102) eines Luftfahrzeugs (100), wobei das Triebwerk (102) eine Längsrichtung (X) aufweist und das vordere Triebwerksbefestigungssystem (150) Folgendes aufweist:
- einen Triebwerkpylon (104) mit einer oberen Wand (104a), einer unteren Wand (104b), zwei Seitenwänden (104c-d) und einer Vorderseite (163), die den vorderen Enden der oberen, der unteren und der Seitenwände (104a-d) entspricht, und einer Frontrippe (110), die an der Vorderseite (163) befestigt ist,
- eine vordere Triebwerksbefestigung (160) mit einem Träger (162), der an der Vorderseite der Frontrippe (110) befestigt ist, einer ersten Verbindungsstange (164), die durch zwei Verbindungspunkte (170a-b) gelenkig an dem Träger (162) befestigt ist, und einer zweiten Verbindungsstange (166), die durch einen Verbindungspunkt (170d) gelenkig an dem Träger (162) befestigt ist, und
- ein vorderes Gehäuse (103) des Triebwerks (102), wobei die erste Verbindungsstange (164) durch einen Verbindungspunkt (170c) gelenkig an dem vorderen Gehäuse (103) befestigt ist und wobei die zweite Verbindungsstange (166) durch einen Verbindungspunkt (170e) gelenkig an dem vorderen Gehäuse (103) befestigt ist,
**dadurch gekennzeichnet, dass** jeder Verbindungspunkt (170a-b, 170d) einer Verbindungsstange (164, 166) an dem Träger (162) innerhalb eines Volumens positioniert ist, das die Vorderseite (163) des Triebwerkpylonen (104) entlang der Längsrichtung (X) nach vorn verlängert.

2. Vorderes Triebwerksbefestigungssystem (150) nach Anspruch 1, **dadurch gekennzeichnet, dass** für jeden Verbindungspunkt (170a-b, 170d) einer Verbindungsstange (164, 166) mit dem Träger (162) letzterer einen Gabelkopf (180a-b, 180d) aufweist, in dem die Verbindungsstange (164, 166) positioniert wird.

3. Vorderes Triebwerksbefestigungssystem (150) nach Anspruch 2, **dadurch gekennzeichnet, dass** der Träger (162) aus einer Hauptplatte (182), einer parallel zur Hauptplatte (182) verlaufenden Nebenplatte (184) und einem Block (186) besteht, der ein Distanzstück zwischen der Hauptplatte (182) und der Nebenplatte (184) bildet, so dass die Hauptplatte (182) gegen die vordere Rippe (110) gedrückt wird und dass für jeden Gabelkopf (180ab, 180d) des Trägers (162) eine der Wände des Gabelkopfs (180a-b, 180d) durch die Hauptplatte (182) und die andere Wand des Gabelkopfs (180a-b, 180d) durch die Nebenplatte (184) gebildet wird.

4. Luftfahrzeug (100) mit einer Struktur, einem Triebwerk (102) und einem vorderen Triebwerksbefestigungssystem (150) nach einem der vorhergehenden Ansprüche, wobei der Triebwerkpylon (104) an der Struktur befestigt ist und wobei das vordere Gehäuse (103) fest mit dem Triebwerk (102) verbunden ist.

## Claims

1. Front engine attachment system (150) for an engine (102) of an aircraft (100), said engine (102) having a longitudinal direction (X), the front engine attachment system (150) having:
- an engine pylon (104) having an upper wall (104a), a lower wall (104b), two lateral walls (104c-d) and a front face (163) corresponding to the front ends of the upper, lower and lateral walls (104a-d) and a frontal rib (110) fastened against the front face (163),
- a front engine attachment (160) having a beam (162) fastened to the front of the frontal rib (110), a first rod (164) fastened in an articulated manner to the beam (162) via two connection points (170a-b) and a second rod (166) fastened in an articulated manner to the beam (162) via one connection point (170d), and
- a front casing (103) of the engine (102), wherein the first rod (164) is fastened in an articulated manner to the front casing (103) via a connection point (170c) and wherein the second rod (166) is fastened in an articulated manner to the front casing (103) via a connection point (170e),
**characterized in that** each point (170a-b, 170d) of connection of a rod (164, 166) to the beam (162) is positioned inside a volume that extends the front face (163) of the engine pylon (104) towards the front along the longitudinal direction (X).

2. Front engine attachment system (150) according to Claim 1, **characterized in that**, for each point (170a-b, 170d) of connection of a rod (164, 166) to the beam (162), the latter has a female clevis (180a-b, 180d) in which the rod (164, 166) is positioned.

3. Front engine attachment system (150) according to Claim 2, **characterized in that** the beam (162) is made up of a main plate (182), a secondary plate (184) parallel to the main plate (182) and a block (186) forming a spacer between the main plate (182) and the secondary plate (184), **in that** the main plate (182) is pressed against the frontal rib (110), and **in that**, for each female clevis (180a-b, 180d) of the beam (162), one of the walls of said female clevis (180a-b, 180d) is realized by the main plate (182) and the other wall of said female clevis (180a-b, 180d) is realized by the secondary plate (184).

4. Aircraft (100) having a structure, an engine (102) and a front engine attachment system (150) according to one of the preceding claims, wherein the engine pylon (104) is fastened to the structure, and wherein the front casing (103) is as one with the engine (102).
